Europäisches Patentamt

European Patent Office

Office européen des brevets

(11) Veröffentlichungsnummer: **0 284 646**
**A2**

## EUROPÄISCHE PATENTANMELDUNG

(21) Anmeldenummer: 87109396.9

(22) Anmeldetag: 30.06.87

(51) Int. Cl.⁴ **G02C 13/00**

(30) Priorität: 03.04.87 DE 3711248

(43) Veröffentlichungstag der Anmeldung:
05.10.88 Patentblatt 88/40

(84) Benannte Vertragsstaaten:
**AT BE CH DE ES FR GB GR IT LI LU NL SE**

(71) Anmelder: **EYEMETRICS-SYSTEMS AG**
**Steinbockstrasse 4**
**CH-7001 Chur(CH)**

(72) Erfinder: **Volk, Stephan**
**Forellenweg 2**
**D-8160 Miesbach(DE)**
Erfinder: **Baum, Joachim**
**Freibadweg 28**
**D-7062 Rudersberg(DE)**

(74) Vertreter: **Grams, Klaus Dieter, Dipl.-Ing. et al**
**Patentanwaltsbüro Tiedtke-Bühling-Kinne-**
**Grupe-Pellmann-Grams-Struif Bavariaring 4**
**D-8000 München 2(DE)**

(54) **Verfahren zum Montieren einer Brille sowie Vorrichtung und Anpassendstück zur Durchführung des Verfahrens.**

㊗ Zum Montieren einer Brille, die ein Mittelteil, zwei Bügel und an den Bügelenden aufgesteckte Bügelendstücke aufweist, werden vor dem Aufstecken der Bügelendstücke auf die Bügelschäfte Anpaßendstücke gesetzt, deren Ausbildung weitgehend mit der der zu montierenden Bügelendstücke übereinstimmt. Mit diesen Anpaßendstücken wird die Brille dem Brillenträger angepaßt, wobei die Anpaßendstücke in richtige Axialstellung und Drehstellung bezüglich der Bügelschäfte gebracht werden. Entsprechend den Stellungen der angepaßten Anpaßendstücke werden die Bügelschäfte abgelängt. Jeder Bügelschaft mit an ihm befestigtem Anpaßendstück wird in eine Vorrichtung eingespannt, wobei eine Anschlageinrichtung der Vorrichtung sowie eine Gegenanschlageinrichtung des Anpaßendstücks dafür sorgen, daß das Anpaßendstück bezüglich der Vorrichtungsachse eine vorbestimmte Drehstellung einnimmt. Mit gleicher vorbestimmter Drehstellung hält die Vorrichtung das zu montierende Bügelendstück, das mit Hilfe der Vorrichtung nach dem Entfernen des Anpaßendstücks vom Bügelschaft auf diesen um eine definierte Strecke aufgeschoben wird. An der fertigen Brille haben die Bügel die durch Anpassen der Anpaßendstücke ermittelten, gewünschten Bügellängen. Die Bügelendstücke haben die durch Anpassen der Anpaßendstücke ermittelte und mittels der Vorrichtung übertragene Drehstellung bezüglich der Schaftachsen bzw. die gewünschte Innenneigung.

Fig. 1C

## Verfahren zum Montieren einer Brille sowie Vorrichtung und Anpaßendstück zur Durchführung des Verfahrens

Die Erfindung bezieht sich auf ein Verfahren zum Montieren einer Brille gemäß dem Oberbegriff von Patentanspruch 1 sowie Mittel zur Durchführung des Verfahrens, nämlich eine Vorrichtung zum Montieren einer Brille gemäß dem Oberbegriff von Patentanspruch 3 sowie ein Anpaßendstück zur Durchführung des Verfahrens.

Eine Vorrichtung sowie ein Verfahren gemäß den Oberbegriffen der Patentansprüche 3 bzw. 1 sind bekannt (deutsches Gebrauchsmuster 86 03 686). Die bekannte Vorrichtung und das mit ihr durchführbare Verfahren dienen dazu, einen Bügel für eine Brille in der Weise zu montieren, daß auf den Bügelschaft ein Bügelendstück aufgeschoben wird und auf diese Weise mit dem Bügelschaft fest verbunden wird Am vom Gelenk des Bügels abgewandten Ende desselben ist ein gerader Zapfen ausgebildet, und das Bügelendstück weist außer einem zur Anlage am bzw hinter dem Ohr des Brillenträgers bestimmten Abschnitt einen im wesentlichen geraden Abschnitt mit einer Bohrung auf, die den Zapfen aufnehmen kann Durch Ablängen des Zapfens auf eine gewünschte Länge und durch Einstellen einer gewünschten Drehstellung des Bügelendstücks relativ zur Zapfenachse vor dem Montieren kann dieser Bügel der Geometrie des Kopfes des Brillenträgers individuell angepaßt werden.

Bei der bekannten Vorrichtung weist die erste Spanneinrichtung eine Öffnung auf, die genau der Form des Bügelschaftes angepaßt ist, so daß der von der ersten Spanneinrichtung gehaltene Bügelschaft sowohl in Richtung seiner Achse eine durch die Spanneinrichtung vorgegebene Lage relativ zu letzterer einnimmt, als auch eine durch die Spanneinrichtung vorgegebene Drehstellung relativ zur Zapfen-bzw Bügelachse hat. Die zweite Spanneinrichtung der bekannten Vorrichtung weist einen Hohlraum auf, der die Form des zu haltenden Bügelendstücks hat. Die zweite Spanneinrichtung ist um die Vorrichtungsachse, die mit der Zapfenachse und der Achse der Bohrung des Bügelendstücks zusammenfällt, drehbar und auf einen vorgegebenen Wert einstellbar, so daß durch diese Einstellung das Bügelendstück in eine gewünschte Drehstellung relativ zur Zapfenachse und somit zum Bügelschaft gebracht werden kann, bevor die beiden Spanneinrichtungen in Richtung der Vorrichtungsachse relativ zueinander bewegt werden.

Bei der bekannten Vorrichtung ist es notwendig, daß die gewünschte Drehstellung des Bügelendstücks in Form einer Maßzahl und einer Maßeinheit, beispielsweise einer Winkelangabe, vorliegen. damit die zweite Spanneinrichtung entsprechend eingestellt werden kann. Außerdem wird auch die gewünschte Bügellänge in Form einer Maßzahl und einer Maßeinheit vorgegeben und dann der Zapfen entsprechend abgelängt. Dieses Vorgehen erfordert somit eine Messung oder Berechnung der gewünschten Bügellänge und der gewünschten Drehstellung und eine Quantifizierung des Meß-bzw. Berechnungsergebnisses Derartige Messungen und Berechnungen sind jedoch meist ungenau, zumindest jedoch kompliziert und aufwendig.

Der Erfindung liegt die Aufgabe zugrunde, das gattungsgemäße Verfahren und die gattungsgemäße Vorrichtung dahingehend weiterzubilden, daß die Ermittlung der gewünschten. Drehstellung und der gewünschten Bügellänge vereinfacht sind, insbesondere die Bestimmung und Übertragung von Zahlenwerten für Bügellänge und Drehstellung entfallen können.

Diese Aufgabe wird erfindungsgemäß durch das Verfahren gemäß Patentanspruch 1 sowie die Vorrichtung gemäß Patentanspruch 3 gelöst. Ein weiteres Mittel zur Lösung der Aufgabe stellt das Anpaßendstück gemäß Patentanspruch 16 dar.

Gemäß der Erfindung wird ausgegangen von einer noch nicht mit Bügelendstücken versehenen Brille, die hier im folgenden als Vorbrille bezeichnet wird. Diese Vorbrille besteht aus dem Mittelteil, das entweder schon mit den Brillengläsern versehen ist oder diese noch nicht aufweist, den Gelenken für die Bügel sowie den Bügelschäften, die noch eine Überlänge haben. Aus der Vorbrille entsteht durch das in erfindungsgemäßer Weise durchgeführte Montieren der Bügelendstücke die für den Brillenträger bestimmte und diesem individuell angepaßte Brille. Es handelt sich somit bei der Vorbrille nicht etwa um ein Muster, anhand dessen der Brillenträger eine bestimmte Fassung auswählt, oder um eine Meßbrille, mit der lediglich bestimmte Messungen im Gesicht bzw. am Kopf des Brillenträgers durchgeführt werden; vielmehr werden die Elemente der Vorbrille selber Elemente der dem Brillenträger ausgehändigten Brille.

An jedem der beiden Bügelschäfte der Vorbrille wird ein Anpaßendstück lösbar angebracht, das mit dem zu montierenden Bügelendstück im wesentlichen formgleich ist Die Vorbrille mit den beiden Anpaßendstücken wird dann dem Brillenträger aufgesetzt, und die Stellung des jeweiligen Anpaßendstücks am Bügelschaft wird solange geändert, bis das Anpaßendstück aufgrund seines Kontaktes mit dem Schädel und/oder dem Ohr des Brillenträgers für korrekten und zugleich bequemen Sitz der mit den Anpaßendstücken versehenen Vorbrille sorgt. In dieser optimal angepaßten Stellung nimmt jedes Anpaßendstück eine bestimmte Drehstellung relativ zur Achse des Bügelschaftes bzw. zur Zapfenachse und eine bestimmte Axialstellung am Bügel ein. Danach werden dann an der Vorbrille die Anpaßendstücke durch die Bügelendstücke der Fertigbrille ersetzt, wobei bei diesem Austausch dafür gesorgt wird, daß die Bügelendstücke sowohl hinsichtlich ihrer Axialstellung als auch hinsichtlich ihrer Drehstellung relativ zum jeweiligen Bügelschaft in praktisch gleicher Weise positioniert sind wie zuvor die Anpaßendstücke. Zu diesem Zweck werden die beiden Zapfen jeweils entsprechend der Axialstellung der Anpaßendstücke abgelängt, wobei dies bevorzugt in der Weise erfolgt, daß noch vor dem Abnehmen der Anpaßendstücke von den Bügelschäften an einer hierzu vorgesehenen Schulter der Anpaßendstücke die überstehenden Schaftenden abgetrennt werden. Alternativ könnte auch an den Bügelschäften eine Markierung entsprechend der Axialstellung der Anpaßendstücke angebracht werden, wobei dann das Ablängen der Bügelschäfte auch nach dem Entfernen der Anpaßendstücke von den Bügelschäften erfolgen kann. Jedenfalls ist zur Ermittlung der gewünschten Bügellänge und zum entsprechenden Ablängen der Bügelschäfte weder die Quantifizierung eines Meßergebnisses noch eine Berechnung erforderlich.

Für jeden Bügel einzeln werden mittels der ersten Spanneinrichtung ein Bügelschaft der Vorbrille mit daran angebrachtem Anpaßendstück sowie mittels der zweiten Spanneinrichtung ein zu montierendes Bügelendstück eingespannt, wobei die Achse der Bohrung des Bügelendstücks und die Achse des Bügelschaftes bzw. die Zapfenachse zusammenfallen und die Vorrichtungsachse definieren. Dabei hält die zweite Spanneinrichtung das zu montierende Bügelendstück in vorbestimmter Drehstellung bezüglich der Vorrichtungsachse. Hierfür kann durch geeignete Anschläge und/oder durch formschlüssigen Eingriff zwischen der zweiten Spanneinrichtung und dem Bügelendstück gesorgt sein.

An der ersten Spanneinrichtung sind zwei Anschläge ausgebildet, die in Kontakt mit am Anpaßendstück ausgebildeten Gegenanschlägen stehen, wenn der Bügelschaft zusammen mit dem Anpaßendstück in die erste Spanneinrichtung eingesetzt und eingespannt ist. Diese Anschläge und Gegenanschläge sind derart angeordnet, daß sie nur bei einer bestimmten Drehstellung des Anpaßendstücks bezüglich der Vorrichtungsachse in Kontakt miteinander treten und daß zugleich der Bügelschaft eingespannt gehalten wird. Dies bedeutet, daß beim Einspannen des Bügelschaftes zusammen mit dem Anpaßendstück in die zweite Spanneinrichtung zugleich eine Ausrichtung des Anpaßendstücks in dessen bestimmte Drehstellung erfolgt. Die Anschläge der ersten Spanneinrichtung, die Gegenanschläge des Anpaßendstücks sowie die zweite Spanneinrichtung sind nun derart ausgebildet, daß die vorbestimmte Drehstellung des eingespannten Bügelendstücks und die bestimmte Drehstellung des Anpaßendstücks miteinander übereinstimmen, d.h. daß das Anpaßendstück und das Bügelendstück in einer gemeinsamen Ebene liegen.

Danach wird dann das Anpaßendstück vom eingespannten Bügelschaft getrennt, und mittels der Antriebseinrichtung werden die beiden Spanneinrichtungen relativ zueinander in Richtung der Vorrichtungsachse so weit verschoben, bis das zu montierende Bügelendstück ausreichend weit auf den korrekt abgelängten Zapfen geschoben ist. Es hat dann das montierte Bügelendstück relativ zum Bügelschaft sowohl hinsichtlich seiner Axialstellung als auch hinsichtlich seiner Drehstellung die gleiche Position, die zuvor das Anpaßendstück eingenommen hat.

Der vorstehend beschriebene Vorgang wird für jeden der beiden Bügel der Brille durchgeführt.

Wie sich aus der vorstehenden Erläuterung ergibt, erfordert auch die Montage der Bügelendstücke mit der gewünschten Drehstellung relativ zur Zapfenachse weder eine Berechnung dieser Drehstellung, noch die Quantifizierung eines Meßergebnisses. Vielmehr wird diese Drehstellung beim erfindungsgemäßen Verfahren zweimal abgetastet, nämlich einmal am Kopf des Brillenträgers, wobei das jeweilige Anpaßendstück entsprechend fixiert wird, und ein zweites Mal an der mit den angepaßten Anpaßendstücken versehenen Vorbrille, indem das Anpaßendstück in eine bestimmte Drehstellung bezüglich der Vorrichtungsachse gebracht wird, so daß dann der Bügelschaft der Vorbrille bezüglich des zu montierenden Bügelendstücks die gewünschte, von Brille zu Brille verschiedene Drehstellung einnimmt.

Vorteilhafte Ausgestaltungen der Erfindung sind in den Unteransprüchen gekennzeichnet.

Ausführungsbeispiele der Erfindung werden im folgenden näher unter Bezugnahme auf die Zeichnungen erläutert. Es zeigen:

Fig. 1 ein Beispiel für eine erfindungsgemäß montierte Brille;

Fig. 2 eine Vorderansicht eines Bügelendstücks der Brille gemäß Fig. 1;

Fig. 3 eine Seitenansicht eines Bügelschaftes der Brille gemäß Fig. 1, an dem ein Anpaßendstück gemäß einer ersten Ausführungsform angebracht ist;

Fig. 4 eine Vorderansicht des Anpaßendstücks gemäß Fig. 3;

Fig. 5 eine vergrößerte Darstellung einer Abwandlung eines Kupplungsabschnitts des Anpaßendstücks gemäß Fig. 4:

Fig 6 eine zweite Ausführungsform eines Anpaßendstücks in Fig 3 ähnlicher Darstellung;

Fig. 7 eine dritte Ausführungsform eines Anpaßendstücks in einer Fig. 3 ähnlichen Darstellung;

Fig 8 eine Vorderansicht des Anpaßendstücks gemäß Fig. 7:

Fig. 9 eine perspektivische Ansicht eines Ausführungsbeispiels der Vorrichtung zum Montieren einer Brille in einem ersten Betriebszustand;

Fig. 10 eine Fig. 9 entsprechende Darstellung der Vorrichtung in einem zweiten Betriebszustand;

Fig. 11 eine ausschnittsweise Seitenansicht der Vorrichtung gemäß den Fig. 9 und 10 zur Erläuterung der Arbeitsweise derselben; und

Fig. 12 eine Draufsicht zu Fig. 11, wobei jedoch die obere von zwei in Fig. 11 gezeigten Spanneinrichtungen nach rechts in Fig. 11 (nach oben in Fig. 12) versetzt dargestellt ist.

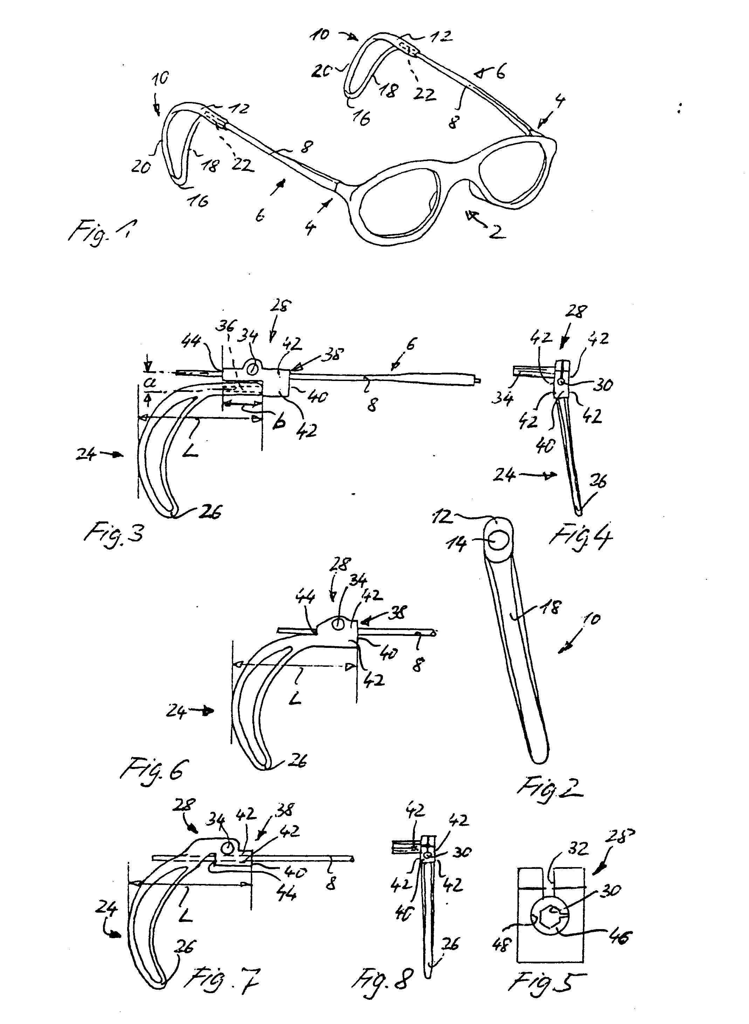

Die in Fig. 1 dargestellte Brille umfaßt ein Mittelteil 2, an dessen Backen mit Hilfe von Gelenken 4 zwei Bügel 6 schwenkbar angelenkt sind. Jeder Bügel 6 besteht aus einem Bügelschaft 8 und einem Bügelendstück 10, das am vom Gelenk 4 abgewandten Ende des Bügelschaftes 8 an diesem befestigt ist. Jedes Bügelendstück 10 weist einen im wesentlichen geraden, ersten Abschnitt 12, in dem eine Bohrung 14 (siehe Fig. 2) ausgebildet ist, sowie einen zur Anlage am Schädel bzw. hinter dem Ohr des Brillenträgers bestimmten zweiten Abschnitt 16 auf. Beim dargestellten Ausführungsbeispiel der Brille besteht dieser zweite Abschnitt 16 aus zwei Elementen, nämlich einem weicheren, bandförmigen Element 18 und einem das bandförmige Element 18 stützenden, steiferen Element 20.

Am dem jeweiligen Bügelendstück 10 zugewandten Ende eines jeden Bügelschaftes 8 ist ein Zapfen 22 ausgebildet, der in die Bohrung 14 eingesetzt ist. Dadurch ist eine hinreichend feste Verbindung zwischen dem jeweiligen Bügelschaft 8 und dem zugeordneten Bügelendstück 10 erzielt, wobei es im Rahmen der vorliegenden Beschreibung auf die genaue Ausbildung dieser Verbindung aus Zapfen 22 und Bohrung 14 nicht ankommt. Wichtig ist lediglich, daß sie durch Einschieben des Zapfens 22 in die Bohrung 14 herbeigeführt wird.

Damit die vorstehend beschriebene Brille sicher und zugleich bequem vom Brillenträger getragen werden kann, ist es zweckmäßig, wenn jeder Bügel eine der individuellen Geometrie des Kopfes des Brillenträgers entsprechende Bügellänge hat und außerdem jedes der beiden Bügelendstücke 10 eine individuell angepaßte Innenneigung hat. Als Innenneigung wird hier das Ausmaß bezeichnet, in dem die unteren Enden der Bügelendstücke 10 um die Achse des zugeordneten Zapfens 22 zum Schädel des Brillenträgers hin gedreht sind. Die individuell angepaßte Bügellänge wird hier als gewünschte Bügellänge bezeichnet; die individuell angepaßte Innenneigung wird hier als gewünschte Drehstellung des Bügelendstücks relativ zur Zapfenachse bezeichnet.

Im folgenden wird anhand von Beispielen erläutert, wie und mit welchen Mitteln die beschriebene Brille in der Weise montiert werden kann, daß ihre Bügel die gewünschte Bügellänge und ihre Bügelendstücke die gewünschte Drehstellung haben.

Dabei wird bei der folgenden Erläuterung ausgegangen von einer sogenannten Vorbrille, die aus dem Mittelteil 2 (mit Brillengläsern oder ohne diese) der zu montierenden Brille und Bügeln 6 besteht, die noch nicht mit den Bügelendstücken 10 versehen sind und deren Schäfte 8 im Vergleich zur fertig montierten Brille noch eine Überlänge haben. Abgesehen davon sind auch die Bügelschäfte 8 Elemente der fertig montierten Brille.

Zur Ermittlung der gewünschten Bügellänge und der gewünschten Drehstellung jedes Bügelendstücks wird an jedem Bügelschaft der Vorbrille ein Anpaßendstück 24 angebracht, von dem eine erste Ausführungsform in den Fig. 3 und 4 gezeigt ist. Das Anpaßendstück 24 umfaßt einen Ohranlageabschnitt 26, der in Form und Ausbildung mit dem zweiten Abschnitt 16 des zu montierenden Bügelendstücks 10 übereinstimmt, da der Ohranlageabschnitt 26 dann, wenn die mit den Anpaßendstücken 24 versehene Vorbrille dem Brillenträger angepaßt wird, das gleiche Verhalten zeigen soll wie der zweite Abschnitt 16 der fertig montierten Brille.

Ferner umfaßt das Anpaßendstück 24 einen Kupplungsabschnitt 28, der dazu dient, den Ohranlageabschnitt 26 lösbar mit dem jeweiligen Bügelschaft 8 zu verbinden Im Kupplungsabschnitt 28 ist eine zylindrische Durchgangsbohrung 30 ausgebildet, die relativ zum Ohranlageabschnitt 26 im wesentlichen die gleiche Lage hat wie die Bohrung 14 des Bügelendstücks 10 zu dessen zweitem Abschnitt 16. Im Kupplungsabschnitt 28 ist ferner ein Schlitz 32 ausgebildet, der in Richtung der Durchgangsbohrungsachse verläuft und die Durchgangsbohrung mit der Außenseite des Kupplungsabschnitts 28 verbindet, so daß mittels einer beiderseits des Schlitzes 32 angreifenden Klemmschraube 34 der Schlitz 32 und somit auch die Durchgangsbohrung 30 verengt werden kann, um den Kupplungsabschnitt 28 am Bügelschaft 8 festzuklemmen und dadurch zu fixieren.

Bei dem in den Fig. 3 und 4 dargestellten ersten Ausführungsbeispiel des Anpaßendstücks 24 sind der Ohranlageabschnitt 26 und der Kupplungsabschnitt 28 als getrennte Elemente ausgebildet. Der Kupplungsabschnitt 28 weist einen zur Durchgangsbohrung 30 parallele Dorn 36 auf. Auf den Dorn 36 ist ein Bügelendstück 10 gesteckt, d.h. ein in jeder Beziehung mit dem zu montierenden Bügelendstück identisches Element. Auf diese Weise ist mit sehr geringem Aufwand dafür gesorgt, daß Form und Ausbildung des Ohranlageabschnitts 26 mit Form und Ausbildung des zweiten Abschnitts 16 übereinstimmen. Die mittels des Dorns 36 bewirkte Verbindung zwischen dem Kupplungsabschnitt 28 und dem Ohranlageabschnitt 26 ist hinreichend fest, um eine Drehung des Ohranlageabschnitts 26 um den Dorn 36 bei bestimmungsgemäßem Gebrauch des Anpaßendstücks 24 zu verhindern.

Am in Fig. 3 rechten Ende des Kupplungsabschnitts 28 weist dieser einen quaderförmigen Kopf 38 auf, der von einer quer zur Durchgangsbohrungsachse und somit zum Bügelschaft verlaufenden Stirnseite, zwei zueinander und zur Durchgangsbohrungsachse parallelen Seitenflächen sowie eine Oberseite und einer Unterseite begrenzt ist. Die Stirnseite bildet eine erste Schulter 40, deren Funktion noch erläutert werden wird. Jede der beiden Seitenflächen bildet zumindest zwei Anschläge 42, deren Funktion ebenfalls noch erläutert werden wird. Diese Anschläge 42 auf jeder der beiden Seitenflächen sind nicht besonders von den übrigen Bereichen der jeweiligen Seitenfläche abgehoben; wichtig ist lediglich, daß sie durch verschiedene Bereiche der jeweiligen Seitenfläche gebildet sind. Am von der Schulter 40 abgewandten Ende des Kupplungsabschnitts 28 ist eine zweite Schulter 44 ausgebildet. Die zweite Schulter 44 umgibt die Durchgangsbohrung; ihr Ort am Kupplungsabschnitt ist ein Maß für die gewünschte Bügellänge, nachdem das Anpaßendstück 24 auf dem Bügelschaft 8 in eine richtig angepaßte Stellung gebracht worden ist, wie noch erläutert werden wird. Bei dem Anpaßendstück gemäß den Fig. 3 und 4 ist der Ohranlageabschnitt 26 - wie bereits erwähnt - durch ein vollständiges Bügelendstück 10 mit der Länge L gebildet. Vom vorderen, in Fig. 3 rechten Ende des Bügelendstücks aus erstreckt sich die Bohrung 14 über eine Länge b, über die sich auch der Dorn 36 erstreckt. Die zweite Schulter 44 befindet sich - betrachtet in Richtung der Durchgangsbohrungsachse - an gleicher Stelle wie der Boden der Bohrung im Bügelendstück, d.h im Abstand b vom vorderen Ende des den Ohranlageabschnitt 26 bildenden Bügelendstücks. Wenn - nach korrekter Anpassung des Anpaßendstücks - der Bügelschaft an der zweiten Schulter 44 abgelängt wird, hat er somit genau die richtige Länge, um dem fertigen Bügel die gewünschte Bügellänge zu geben, nachem der abgelängte Bügel bis zum Boden der Bohrung 14 des zu montierenden Bügelendstücks in die Bohrung eingesteckt worden ist.

Die zweite Schulter 44 muß allerdings nicht am vorstehend erläuterten Ort am Kupplungsabschnitt 28 ausgebildet sein. Beispielsweise kann vorgesehen sein, daß der korrekt abgelängte Zapfen des Bügels 8 nicht vollständig in die Bohrung 14 des Bügelendstücks 10 eingeschoben wird, sondern beispielsweise 2 mm vor dem Boden der Bohrung 14 endet. In diesem Fall ist dann die zweite Schulter 44 um die vorstehend genannte trecke (2 mm) weiter rechts (in Fig. 3) ausgebildet. Ferner ist vorstehend davon ausgegangen, daß das Ablängen des Bügelschaftes 8 genau in der Ebene der zweiten Schulter 44 erfolgt. Auch dies ist jedoch kein notwendiges Merkmal. Beispielsweise kann aufgrund des zum Ablängen des Bügelschaftes 8 verwendeten Werkzeugs vorgegeben sein, daß in einem bestimmten Abstand von beispielsweise 1 mm von der Schulter 44 der Schnitt erfolgt. In diesem Fall ist dann die zweite Schulter 44 um den genannten Abstand (1 mm) weiter rechts (in Fig. 3) ausgebildet. Gemeinsam ist den vorstehend beschriebenen Möglichkeiten für die Anordnung der zweiten Schulter 44, daß deren Ort am Kupplungsabschnitt 28 ein Maß für die gewünschte Bügellänge ist bzw. definiert, bei welcher Länge des Bügelschaftes 8 dieser nach dem Anpaßvorgang mit Hilfe des Anpaßendstücks 24 abgelängt werden muß, damit der Bügel die gewünschte Bügellänge hat.

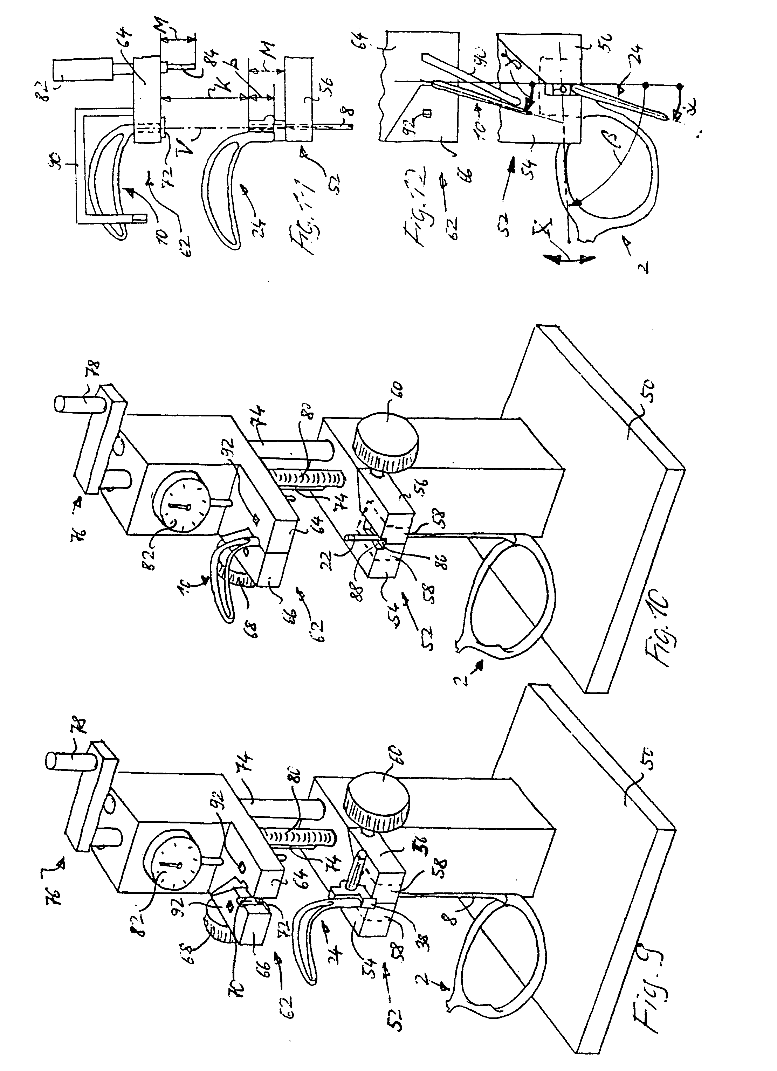

Eine Abwandlung der in den Fig. 3 und 4 dargestellten ersten Ausführungsform des Anpaßendstücks zeigt aus schnittsweise Fig. 5. Bei dieser Ahwandlung ist die Durchgangsbohrung 30 in einer längsgeschlitzten Hülse 46 ausgebildet, die in einer zweiten Durchgangsbohrung 48 im Kupplungsabschnitt 28 ausgebildet ist. Dabei ist die Hülse 46 in der zweiten Durchgangsbohrung 48 drehbar angeordnet. Diese Ausbildung der ersten Durchgangsbohrung 30 in der drehbaren Hülse 46 ist insbesondere dann vorteilhaft, wenn der Zapfen 22 bzw. der Bügelschaft 8 ein unrundes Profil, beispielsweise ein Sechskantprofil, hat, damit ein solcher Zapfen trotz seiner Unrundheit einwandfrei im Kupplungsabschnitt 28 gedreht und in beliebiger Drehstellung fixiert werden kann, ohne daß beim Fixieren eine Veränderung der zuvor eingestellten Drehstellung erfolgt.

Fig. 6 zeigt eine zweite Ausführungsform des Anpaßendstücks 24. Für dessen mit entsprechenden Elementen der ersten Ausführungsform übereinstimmende Elemente sind gleiche Bezugszeichen wie bei der ersten Ausführungsform verwendet; diese Elemente werden nicht erneut erläutert. Vielmehr werden im folgenden lediglich die Unterschiede zur ersten Ausführungsform angegeben.

Bei der zweiten Ausführungsform des Anpaßendstücks sind der Kupplungsabschnitt 28 und der Ohranlageabschnitt 26 einstückig miteinander ausgebildet. Besondere Maßnahmen zum Verbinden von Ohranlageabschnitt 26 und Kupplungsabschnitt 28, wie sie die erste Ausführungsform in Form des Dornes 36 aufweist, können daher entfallen. Die Länge des Anpaßendstücks 24 stimmt mit der Länge L des zu montierenden Bügelendstücks 10 überein. Bei der Vorbrille mit den Anpaßendstücken gemäß der ersten Ausführungsform nehmen selbst bei korrekt angepaßten Anpaßendstücken die Ohranlageabschnitte 26 nicht genau diejenige Position ein, die bei der fertig montierten Brille die zweiten Abschnitte 16 relativ zu den Zapfen 22 haben. Es besteht nämlich dadurch ein Positionsunterschied, daß der Kupplungsabschnitt 28 den Ohranlageabschnitt 26 um den Abstand zwischen den Achsen des Dornes 26 und des Bügelschaftes 8 zu weit unten (in Fig. 3) hält. Dieser Abstand ist in Fig. 3 mit a bezeichnet. Die Auswirkung dieses Positionsunterschiedes auf die Ermittlung der gewünschten Bügellänge und der gewünschten Drehstellung ist praktisch meist ohne Bedeutung. Wenn diese ohnehin geringe Auswirkung noch weiter verringert sein soll, ist die zweite Ausführungsform gemäß Fig. 6 insofern vorteilhaft, als bei ihr der vorstehend erläuterte Positionsunterschied geringer als bei der ersten Ausführungsform ist.

Eliminiert ist dieser Positionsunterschied bei der dritten Ausführungsform gemäß den Fig. 7 und 8, bei der die erste Durchgangsbohrung 30 im Kupplungsabschnitt 28 relativ zum Ohranlageabschnitt 26 genau die gleiche Lage hat, wie bei dem zu montierenden Bügelendstück 10 dessen Bohrung 14 zum zweiten Abschnitt 16. Bei der dritten Ausführungsform sind wiederum der Ohranlageabschnitt 26 und der Kupplungsabschnitt 28 einstückig miteinander ausgebildet. Wegen der beschriebenen Lage der Durchgangsbohrung 30 im Kupplungsabschnitt 28 ist die zweite Schulter 44 nicht - wie bei den Ausführungsformen gemäß den Fig. 3 bis 6 - am hinteren Ende der Durchgangsbohrung 30 ausgebildet; vielmehr ist im Kupplungsabschnitt 28 eine nach unten offene Ausnehmung ausgebildet, deren in Fig. 7 rechte Flanke die zweite Schulter 44 bildet.

Im übrigen stimmt die dritte Ausführungsform mit der zweiten Ausführungsform überein. Für allen Ausführungs formen gemeinsame Elemente sind wiederum gleiche Bezugszeichen verwendet; diese Elemente werden nicht erneut erläutert.

Die Vorbrille mit den beiden Anpaßendstücken 24 wird dem Brillenträger angepaßt. Dies bedeutet, daß die beiden Anpaßendstücke in eine solche Axialstellung auf den Bügelschäften 8 und eine solche Drehstellung gebracht werden, daß die Ohranlageabschnitte 26 für sicheren Sitz der Vorbrille sorgen, zugleich jedoch keine Druckstellen am Kopf bzw. den Ohren des Brillenträgers verursachen, d.h. für einen möglichst hohen Tragekomfort sorgen. Nach dieser korrekten Anpassung der Anpaßendstücke sind durch ihre Axialstellungen auf den Bügelschäften 8 die gewünschten Bügellängen gegeben und sind ihre Drehstellungen relativ zu den Achsen der Bügelschäfte 8 die gewünschten Drehstellungen. In ihren korrekt angepaßten Stellungensind die Anpaßendstücke 24 mit Hilfe der jeweiligen Klemmschraube 34 fixiert. Im Anschluß an dieses Anpassen der Anpaßendstücke werden die beiden Bügelschäfte in bereits vorstehend erläuterter Weise abgelängt. Dieses Ablängen kann zu einem beliebigen Zeitpunkt erfolgen, solange die Anpaßendstücke in ihrer angepaßten Stellung noch an den Bügelschäften 8 fixiert sind. Wenn an den Bügelschäften 8 eine der zweiten Schulter 44 entsprechende Markierung angebracht wird, kann das Ablängen sogar noch nach dem Entfernen der Anpaßendstücke 24 von den Bügelschäften 8 erfolgen, weil dann die Markierungen bestimmen, bei welcher Schaftlänge abgelängt werden muß.

Im folgenden wird eine Vorrichtung erläutert, mit deren Hilfe die Bügelendstücke 10 derart montiert werden, daß die Bügel die gewünschten Bügellängen und die Bügelendstücke die gewünschten Drehstellungen haben. Bei der Erläuterung der mit dieser Vorrichtung durchgeführten Verfahrensschritte wird im folgenden davon ausgegangen, daß das Ablängen der Bügelschäfte 8 als nächster Schritt nach dem Anpassen der Anpaßendstücke erfolgt.

Die in den Fig. 9 und 10 in zwei verschiedenen Betriebszuständen gezeigte Vorrichtung umfaßt eine Grundplatte 50, an der vorrichtungsfest eine erste Spanneinrichtung 52 angeordnet ist. Die erste Spanneinrichtung 52 weist zwei Spannbacken auf, nämlich eine vorrichtungsfeste Spannbacke 54 sowie eine bewegbare Spannbacke 56. Die beiden Spannbacken 54 und 56 begrenzen gemeinsam eine gerade, zylindrische Aufnahmeöffnung, die zum Einspannen des Bügelschaftes 8 (siehe Fig. 10) bestimmt ist. Im Bereich der Aufnahmeöffnung weisen die beiden Spannbacken 54 und 56 Einsätze 58 aus einem elastomeren Werkstoff auf, der ungleichmäßigen Pressungen und Verspannungen vorbeugen soll Die beiden Spannbacken 54 und 56 sind auf geeignete Weise zueinander spannbar, beispielsweise mittels einer Spannschraube 60.

Die Vorrichtung weist ferner eine zweite Spanneinrichtung 62 auf, die senkrecht oberhalb der ersten Spanneinrichtung 52 angeordnet ist. Die zweite Spanneinrichtung 62 umfaßt eine vorrichtungsfeste Spannbacke 64 sowie eine bewegbare Spannbacke 66. Mittels einer Spannschraube 68 sind die beiden Spannbacken zueinander spannbar. Gemeinsam begrenzen die Spannbacken 64 und 66 eine gerade Aufnahmeöffnung 70 für den die Bohrung 14 aufweisenden ersten Abschnitt 12 des Bügelendstücks 10. Im Bereich der Aufnahmeöffnung 70 können die beiden Spannbacken 64 und 66 ähnlich wie die Spann backen 54 und 56 Einsätze aus elastomerem Werkstoff aufweisen, obwohl dies nicht dargestellt ist. Die Aufnahmeöffnung 70 hat ein unrundes Profil, das mit dem Profil des aufzunehmenden ersten Abschnitts 12 des Bügelendstücks 10 übereinstimmt und beispielsweise flachoval ausgebildet ist, wie dies in Fig. 2 erkennbar ist. Am in den Fig. 9 und 10 unteren Ende der Aufnahmeöffnung 70 ist ein Axialanschlag 72 angeordnet, an dem das vordere Ende des ersten Abschnitts 12 des Bügelendstücks 10 anliegen kann, so daß durch diesen Axialanschlag 72 die Stellung des eingespannten Bügelendstücks 10 in der zweiten Spanneinrichtung 62 in Richtung der Achse der Aufnahmebohrung 70 definiert ist.

Die Aufnahmebohrung 70 sowie die Aufnahmebohrung der ersten Spanneinrichtung 52 sind derart ausgebildet, daß die Achse der Aufnahmebohrung der ersten Spanneinrichtung 52 und die Achse der Bohrung 14 des in die zweite Spanneinrichtung 62 eingespannten Bügelendstücks 10 miteinander zusammenfallen und gemeinsam eine Vorrichtungsachse V (siehe Fig. 11) bilden, mit der ferner die Achse des Bügelschaftes 8 zusammenfällt, wenn dieser in die erste Spanneinrichtung 52 eingespannt ist.

Die beiden Spanneinrichtungen 52 und 62 sind in Richtung der Vorrichtungsachse V relativ zueinander bewegbar, wobei diese Bewegung von zwei Führungssäulen 74 geführt wird, die fest mit der ersten Spanneinrichtung 52 verbunden sind und an denen die zweite Spanneinrichtung 62 verschiebbar ist. Ferner weist die Vorrichtung eine Antriebseinrichtung 76 auf, die beim dargestellten Ausführungsbeispiel eine mittels einer Kurbel 78 drehbare Gewindespindel 80 aufweist. Durch Drehen der Kurbel 78 kann die zweite Spanneinrichtung 62 nach oben bzw. unten bewegt werden. Es versteht sich, daß sowohl die Antriebseinrichtung 76 als auch die Mittel zur Führung der Bewegung zwischen den beiden Spanneinrichtungen eine andere Ausbildung als die dargestellte haben können. Beispielsweise kommen auch ein Kniehebelantrieb und ein Zahnstangenantrieb in Frage.

An der zweiten Spanneinrichtung 62 ist eine Längenmeßuhr 82 angeordnet, deren Taster 84 in Richtung zur ersten Spanneinrichtung 52 vorsteht. Die Längenmeßuhr 82 erleichtert es, die Verschiebung der zweiten Spanneinrichtung 62 relativ zur ersten während des Aufschiebens des Bügelendstücks 10 auf den Zapfen 22 zu beobachten.

Wie insbesondere Fig. 10 erkennen läßt, ist an der ersten Spanneinrichtung 52 auf deren Oberseite eine senkrecht zur Vorrichtungsachse V verlaufende Nut mit Rechteckprofil in den Einsätzen 58 ausgebildet. Der ebene Boden dieser Nut bildet eine Schulter 86, durch deren Längsmitte senkrecht die Vorrichtungsachse V verläuft. Diese Schulter 86 ist dafür bestimmt, mit der ersten Schulter 40 des Anpaßendstücks 24 zusammenzuwirken, wobei dann die erste Schulter 40 des Anpaßendstücks eine Gegenschulter zur Schulter 86 bildet. An die Schulter 86 schließen sich zwei Nutflanken an, die als ebene Flächen ausgebildet sind und parallel zur Vorrichtungsachse V verlaufen. Jede dieser Nutflanken bildet mit zwei verschiedenen Bereichen zwei Anschläge 88, von denen in Fig. 10 lediglich einer bezeichnet ist. Diese Anschläge 88 unterscheiden sich nicht von den übrigen Bereichen der Nutflanken. Tatsächlich könnte jeder Bereich bzw. jeder Punkt der Nutflanke die Funktion eines Anschlages erfüllen. Die Anschläge 88 dienen dazu, mit den Anschlägen 42 des Anpaßendstücks 24 zusammenzuwirken, so daß dann die Anschläge 42 Gegenanschläge zu den Anschlägen 88 bilden.

In die vorstehend beschriebene Vorrichtung wird die Vorbrille mit den angepaßten Anpaßendstücken 24 nach dem Ablängen der Zapfen 22 bzw. Bügelschäfte 8 so eingespannt, wie dies in Fig. 9 gezeigt ist. Bei geöffneter erster Spanneinrichtung 52 wird die Schulter 40 des Anpaßendstücks 24 in Anlage an der Schulter 86 gebracht. Gleichzeitig werden die Anschläge 42 auf der einen Seitenfläche des Kopfes 38 des Anpaßendstücks 24 in Anlage an den zugeordneten Anschlägen 88 gebracht. Wenn dann die zweite Spanneinrichtung geschlossen wird, ist der quaderförmige Kopf 38 genau in die die Anschläge 88 und die Schulter 86 definierende Nut eingespannt, während gleichzeitig der Bügelschaft 8 in die zugeordnete Aufnahmebohrung eingespannt ist. Wegen der in diesem Zustand miteinander in Berührung stehenden Anschläge 88 der ersten Spanneinrichtung 52 und der Anschläge 42 (Gegenanschläge) des Anpaßendstücks 24 kann das Anpaßendstück 24 in der ersten Spanneinrichtung 52 nur eine vorbestimmte Drehstellung bezüglich der Vorrichtungsachse V einnehmen, wie dies insbesondere Fig. 12 erkennen läßt. Dies heißt mit anderen Worten, daß während des Einspannens des Anpaßendstücks 24 in die erste Spanneinrichtung 52 das Anpaßendstück 24 in diese bestimmte Drehstellung ausgerichtet wird. Da das Anpaßendstück 24 am Bügelschaft 8 fixiert ist, werden bei dieser Ausrichtung auch der Bügelschaft 8 und das mit ihm verbundene Mittelteil 2 der Brille um die Vorrichtungsachse V gedreht, wie dies durch einen Doppelpfeil X in Fig. 12 angedeutet ist. Der die Drehstellung des Anpaßendstücks bezüglich der Vorrichtungsachse V beschreibende Winkel $\alpha$ (siehe Fig. 12) ist durch die Geometrie des Anpaßendstücks 24 und die Anschläge 88 der ersten Spanneinrichtung 52 vorgegeben. Veränderlich dagegen ist der Winkel $\beta$, der die Drehstellung des Mittelteils 2 der Brille bezüglich der Vorrichtungsachse V beschreibt. Dieser richtet sich nach der während der Anpassung vorgenommenen Einstellung der Innenneigung des Ohranlageabschnitts 26.

Aus der vorstehenden Beschreibung dürfte klar sein, daß die Funktion der Anschläge 88 und der Anschläge 42 (Gegenanschläge) darin besteht, das Anpaßendstück 24 in der Vorrichtung auszurichten und in die bestimmte Drehstellung zu bringen. Jede Anschlageinrichtung, die diese Funktion erfüllt, ist im Sinne der Erfindung anwendbar. Vorgeschrieben sind mindestens zwei Anschläge und mindestens zwei Gegenanschläge, weil der Kontakt zwischen einem punktförmigen Anschlag und einem punktförmigen Gegenanschlag diese Funktion nicht erfüllen kann. Die Vorschrift, daß zwei Anschläge vorhanden sein sollen, kann ersetzt werden durch die Vorschrift, daß ein Anschlag vorhanden sein soll, wenn darunter ein Anschlag mit mehreren Kontaktbereichen verstanden wird, die nicht konzentrisch zur Vorrichtungsachse angeordnet sind. Entsprechendes gilt für die Gegenanschläge, d.h. die Anschläge am Anpaßendstück 24.

Die Schulter 86 wirkt mit der Schulter 40 (Gegenschulter) dabei zusammen, den Bügelschaft 8 und das Anpaßendstück 24 in Richtung der Vorrichtungsachse V in definierter Stellung zu positionieren. Dies erleichtert das Aufschieben des zu montierenden Bügelendstücks 10, ist jedoch nicht notwendig, damit das Bügelendstück überhaupt aufgeschoben werden kann.

Nach dem auf vorstehend beschriebene Weise durchgeführten Einspannen des Bügelschaftes 8 mit dem daran befestigten Anpaßendstück 24 in die erste Spanneinrichtung 52 wird das Anpaßendstück 24 vom Bügelschaft 8 gelöst und abgezogen, so daß sich der in Fig. 10 dargestellte Betriebszustand ergibt. Es versteht sich, daß die zwischen dem Anpaßendstück 24 und den beiden Spannbacken 54 und 26 wirkenden Reibungskräfte so gering sein müssen, daß das Abziehen des Anpaßendstücks 24 vom Zapfen 22 ohne weiteres möglich ist. Zugleich muß jedoch der Reibschluß zwischen dem Bügelschaft 8 und den Spannbacken 54 und 56 so groß sein, daß während des Abziehens des Anpaßendstücks 24 vom Zapfen 22 der Bügelschaft 8 nicht in Richtung der Vorrichtungsachse V in der ersten Spanneinrichtung 52 verschoben wird.

Im Anschluß daran wird das zuvor in die zweite Spanneinrichtung 62 eingespannte, zu montierende Bügelendstück 10 auf den Zapfen 22 aufgeschoben. Damit das zu montierende Bügelendstück 10 nach der Montage bezüglich des Zapfens 22 die gewünschte Drehstellung hat, muß es in der Vorrichtung die gleiche Drehstellung bezüglich der Vorrichtungsachse V haben, die zuvor das Anpaßendstück 24 bezüglich der Vorrichtungsachse V hatte. Dies bedeutet, daß der in Fig. 12 eingezeichnete Winkel $\gamma$, der die Drehstellung des zu montierenden Bügelendstücks 10 bezüglich der Vorrichtungsachse beschreibt, mit dem Winkel $\alpha$ übereinstimmen muß. Mit anderen Worten heißt dies, daß das zu montierende Bügelendstück 10 und das Anpaßendstück 24 in derselben, die Vorrichtungsachse V einschließenden Ebene liegen müssen. (Eine geringe Abweichung von dieser Forderung kann durch den vorstehend im Zusammenhang mit den Anpaßendstücken gemäß den Fig. 6 bis 8 erläuterten Abstand a verursacht sein. Eine solche Abweichung ist jedoch unter praktischen Gesichtspunkten meist zulässig).

Für die vorstehend geforderte gleiche Drehstellung des zu montierenden Bügelendstücks 10 und des Anpaßendstücks 24 bezüglich der Vorrichtungsachse V sorgen die Ausbildung der Aufnahmeöffnung 70, die den ersten Abschnitt 12 des Bügelendstücks 10 formschlüssig umgreift und die mit den Anschlägen 42 (Gegenanschläge) zusammenwirkenden Anschläge 88. Zur genauen Ausrichtung des zu montierenden Bügelendstücks 10 in der vorbestimmten Drehstellung kann allein oder zusätzlich ein Drehstellungsanschlag 90 dienen, der an der zweiten Spanneinrichtung angebracht ist.

Das Aufstecken des Bügelendstücks 10 wird im folgenden unter Bezugnahme auf Fig. 11 erläutert, wobei Fig. 11 noch das Anpaßendstück 24 im eingespannten Zustand zeigt, das vor dem Aufstecken entfernt werden muß. Mittels der Antriebseinrichtung 76 wird zunächst die zweite Spanneinrichtung 62 um die Strecke K nach unten gefahren. In der dadurch erreichten Stellung befindet sich die Öffnung der Bohrung 14 des Bügelendstücks 10 unmittelbar am Ende des abgelängten Zapfens 22. Da der Taster 84 der Längenmeßuhr 82 über die als Bezugsfläche dienende Unterseite der zweiten Spanneinrichtung 62 nach unten um eine Strecke M vorsteht, die mit der Strecke übereinstimmt, um die der abgelängte Zapfen 22 über die als weitere Bezugsfläche dienende Oberseite der ersten Spanneinrichtung 52 nach oben vorsteht, kommt zum gleichen Zeitpunkt der Taster 84 in Berührung mit der weiteren Bezugsfläche. Bei weiterer Abwärtsbewegung der zweiten Spanneinrichtung 62 kann dann an der Längenmeßuhr 82 die gewünschte Einstecktiefe des Zapfens 22 in die Bohrung 14 beobachtet werden. Diese ist beispielsweise gleich der gesamten Bohrungslänge b.

Danach werden dann beide Spanneinrichtungen geöffnet und kann die Brille der Vorrichtung entnommen werden. Das Bügelendstück 10 nimmt die gewünschte Drehstellung am Bügelschaft 8 ein: der Bügel 6 hat die gewünschte Bügellänge. Da diejenigen Maßnahmen, die für eine hinreichend feste Verbindung zwischen dem Zapfen 22 und der Bohrung 14 sorgen, nicht Gegenstand der Erfindung sind, werden sie hier nicht näher erläutert.

Das vorstehend beschriebene Montieren des Bügelendstücks 10 am Bügelschaft 8 wird, nachdem es für einen der beiden Bügel durchgeführt worden ist, auf gleiche Weise für den anderen der beiden Bügel durchgeführt. Eine links und rechts (in Fig. 12) symmetrische Ausbildung der Anschläge 88 ist daher zweckmäßig. Wenn der Winkel $\gamma$ ungleich Null ist und ein Drehstellungsanschlag 90 vorgesehen ist, ist es zweckmäßig, den Drehstellungsanschlag beispielsweise mit Hilfe von zwei Einstecköffnungen 92 umsetzbar zu machen, damit er für jeden der beiden Bügel 6 der Brille seine Funktion erfüllen kann.

Das Aufschieben des Bügelendstücks 10 auf den Zapfen 22 um die gewünschte Strecke muß nicht auf vorstehend beschriebene Weise erfolgen. Beispielsweise kann in der Weise vorgegangen werden, daß das Bügelendstück 10 aufgeschoben wird, bis das freie Ende des Zapfens am Boden der Bohrung 14 anschlägt. Eine weitere Möglichkeit besteht darin, das Bügelendstück 10 aufzu schieben, bis sein freies, in Fig. 11 unteres Ende an der ersten Spanneinrichtung 52, und zwar deren Schulter 86 anstößt. Dieses Vorgehen ist insbesondere in Verbindung mit den Anpaßendstücken gemäß den Fig. 6 bis 8 zweckmäßig, deren Länge L mit der des Bügelendstücks 10 übereinstimmt. Schließlich besteht eine weitere Möglichkeit darin, die beiden Spanneinrichtungen 52 und 62 zueinander zu bewegen, bis sie mittelbar oder unmittelbar in Anlage aneinander stehen.

## Ansprüche

1. Verfahren zum Montieren einer Brille, die aus einem Mittelteil und zwei mit Hilfe von Gelenken mit dem Mittelteil verbundenen Bügeln besteht, die jeweils einen Bügelschaft, an dessen vom Gelenk abgewandten Ende ein gerader Zapfen ausgebildet ist, und ein Bügelendstück aufweisen, in dem eine Bohrung zur Aufnahme des Zapfens ausgebildet ist, wobei jedes Bügelendstück mit dem zugeordneten Zapfen in der Weise verbunden wird, daß der Zapfen auf eine gewünschte Bügellänge abgelängt wird, daß der Zapfen mit der Bohrung des Bügelendstücks koaxial ausgerichtet wird, daß das Bügelendstück in eine gewünschte Drehstellung relativ zur Zapfenachse gebracht wird, dadurch gekennzeichnet, daß vor dem Verbinden der Bügelendstücke mit den Zapfen zur Ermittlung der gewünschten Bügellänge und Drehstellungen an jedem Bügelschaft lösbar ein mit dem zu montierenden Bügelendstück im wesentlichen form gleiches Anpaßendstück angebracht wird, daß am Kopf des Brillenträgers die Anpaßendstücke in eine der Ohr-und Kopfgeometrie des Brillenträgers angepaßte Stellung am jeweiligen Schaft gebracht und in dieser Stellung lösbar fixiert werden, während der Brillenträger die noch nicht mit den Endstücken versehene Brille trägt, daß die Zapfen entsprechend den Stellungen der Anpaßendstücke abgelängt werden, daß jeder Zapfen koaxial und in solcher Drehstellung relativ zum zu montierenden Bügelendstück gehalten wird, daß das zu montierende Bügelendstück und das noch am Schaft fixierte Anpaßendstück in Richtung der Zapfenachse fluchtend miteinander ausgerichtet sind, und daß das Einschieben des Zapfens in die Bohrung des zu montierenden Bügelendstücks erfolgt, nachdem das Anpaßendstück vom Bügelschaft abgenommen worden ist.

2. Verfahren nach Anspruch 1, dadurch gekennzeichnet, daß das Einschieben des Zapfens in die Bohrung des zu montierenden Bügelendstücks unter Wärmezufuhr zum Zapfen und/oder zum Bügelendstück erfolgt.

3. Vorrichtung zum Montieren einer Brille gemäß dem Verfahren nach Anspruch 1 oder 2, mit einer ersten Spanneinrichtung zum lösbaren Halten eines der beiden Bügelschäfte, dessen Achse bei in die erste Spanneinrichtung eingesetztem Bügelschaft mit der Vorrichtungsachse zusammenfällt, mit einer zweiten Spanneinrichtung zum lösbaren Halten des zu montierenden Bügelendstücks, wobei die zweite Spanneinrichtung das Bügelendstück in vorbestimmter Drehstellung bezüglich der Vorrichtungsachse und die Bohrung des Bügelendstücks koaxial zur Vorrichtungsachse hält, und mit einer Antriebseinrichtung zum Verschieben der beiden Spanneinrichtungen relativ zueinander in Richtung der Vor richtungsachse, dadurch gekennzeichnet, daß die erste Spanneinrichtung (52) den Bügelschaft (8) in beliebiger Drehstellung desselben bezüglich der Vorrichtungsachse (V) halten kann, daß die erste Spanneinrichtung (52) mit zumindest zwei Anschlägen versehen ist, die zum Kontakt mit an einem Anpaßendstück (24) ausgebildeten Gegenanschlägen (42) bestimmt sind, wobei dieser Kontakt bei zusammen mit dem Anpaßendstück in die erste Spanneinrichtung eingesetztem Bügelschaft vorhanden ist und die Drehstellung des Anpaßendstücks bezüglich der Vorrichtungsachse bestimmt, und daß die zweite Spanneinrichtung (62) einerseits und die Anschläge (88) der ersten Spanneinrichtung (52) andererseits derart angeordnet und ausgebildet sind, daß die vorbestimmte Drehstellung des Bügelendstücks (10) und die Drehstellung des Anpaßendstücks (24) miteinander übereinstimmen.

4. Vorrichtung nach Anspruch 3, dadurch gekennzeichnet, daß die erste Spanneinrichtung (52) mit einer Schulter (86) versehen ist, die zum Kontakt mit einer an dem Anpaßendstück (24) ausgebildeten Gegenschulter (40) bestimmt ist, wobei dieser Kontakt die Axialstellung des Anpaßendstücks (24) bezüglich der ersten Spanneinrichtung (52) bestimmt.

5. Vorrichtung nach Anspruch 3 oder 4, dadurch gekennzeichnet, daß die erste Spanneinrichtung (52) zwei zueinander spannbare Spannbacken (54, 56) aufweist, die gemeinsam eine zylindrische Aufnahmeöffnung für den Bügelschaft (8) begrenzen.

6. Vorrichtung nach Anspruch 5, dadurch gekennzeichnet, daß die Spannbacken (54, 56) im Bereich der Aufnahmeöffnung aus einem elastomeren Werkstoff bestehen.

7 Vorrichtung nach einem der Ansprüche 3 bis 6, dadurch gekennzeichnet, daß die beiden Anschläge durch Bereiche einer Kante gebildet sind, die mit Abstand senkrecht zur Vorrichtungsachse (V) verläuft.

8. Vorrichtung nach einem der Ansprüche 3 bis 6, dadurch gekennzeichnet, daß die beiden Anschläge (88) durch Bereiche einer ebenen Fläche gebildet sind, die mit Abstand parallel zur Vorrichtungsachse (V) verläuft.

9. Vorrichtung nach Anspruch 8, dadurch gekennzeichnet, daß an der ersten Spanneinrichtung (52) eine senkrecht zur Vorrichtungsachse (V) verlaufende Nut mit Rechteckprofil ausgebildet ist, deren Boden die Schulter (86) bildet, wobei die Anschläge (88) an zumindest einer der Flanken der Nut ausgebildet sind.

10. Vorrichtung nach einem der Ansprüche 3 bis 9, dadurch gekennzeichnet, daß die Anschläge (88) und gegebenenfalls die Schulter (86) auf der der zweiten Spanneinrichtung (62) zugewandten Seite der ersten Spanneinrichtung (52) angeordnet sind.

11. Vorrichtung nach einem der Ansprüche 3 bis 10, dadurch gekennzeichnet, daß die zweite Spanneinrichtung (62) zwei zueinander spannbare Spannbacken (64, 66) aufweist, die gemeinsam eine gerade Aufnahmeöffnung (70) für den die Bohrung (14) des Bügelendstücks (10) aufweisenden Abschnitt (12) desselben begrenzen.

12. Vorrichtung nach Anspruch 11, dadurch gekennzeichnet, daß die Spannbacken (64, 66) im Bereich der Aufnahmeöffnung (70) aus einem elastomeren Werkstoff bestehen.

13. Vorrichtung nach Anspruch 11 oder 12, dadurch gekennzeichnet, daß die Aufnahmeöffnung (70) unrund ist.

14. Vorrichtung nach einem der Ansprüche 11 bis 13, dadurch gekennzeichnet, daß die zweite Spanneinrichtung (62) einen Drehstellungsanschlag (90) aufweist, an dem das Bügelendstück (10) in seiner bestimmten Drehstellung anliegt.

15. Vorrichtung nach einem der Ansprüche 11 bis 14, dadurch gekennzeichnet, daß die zweite Spanneinrichtung (62) einen Axialanschlag (72) aufweist, der die Stellung des Bügelendstücks (10) in der zweiten Spanneinrichtung in Richtung der Vorrichtungsachse (V) bestimmt.

16. Anpaßendstück zur Durchführung des Verfahrens nach Anspruch 1 oder 2, gekennzeichnet durch einen Ohranlageabschnitt (26), der Form und Ausbildung eines entsprechenden Abschnitts (16) des zu montierenden Bügelendstücks (10) hat, einen Kupplungsabschnitt (28), der fest verbunden mit dem Ohranlageabschnitt ist und eine gerade Durchgangsbohrung (30) aufweist, die relativ zum Ohranlageabschnitt im wesentlichen die gleiche Lage hat wie die Bohrung (14) des zu montierenden Bügelendstücks (10) relativ zu dessen entsprechendem Abschnitt (12), und eine Fixiereinrichtung (34) zum lösbaren Fixieren des in die Durchgangsbohrung eingesteckten Zapfens (22) sowie zumindest zwei am Kupplungsabschnitt (28) ausgebildete Anschläge (42), die in Umfangsrichtung der Durchgangsbohrung (30) bestimmte Stellungen bezüglich des Ohranlageabschnitts (26) einnehmen.

17. Anpaßendstück nach Anspruch 16, gekennzeichnet durch eine am Kupplungsabschnitt (28) ausgebildete Schulter (40), die im wesentlichen quer zur Durchgangsbohrungsachse verläuft.

18. Anpaßendstück nach Anspruch 16 oder 17, dadurch gekennzeichnet, daß der Kupplungsabschnitt (28) und der Ohranlageabschnitt (26) einstückig miteinander ausgebildet sind.

19. Anpaßendstück nach Anspruch 18, dadurch gekennzeichnet, daß die Durchgangsbohrungsachse mit der Achse der Bohrung (14) des zu montierenden Bügelendstücks (10) zusammenfällt.

20. Anpaßendstück nach Anspruch 16 oder 17, dadurch gekennzeichnet, daß der Kupplungsabschnitt (28) und der Ohranlageabschnitt (26) getrennt gefertigte Elemente sind, wobei der Kupplungsabschnitt einen Dorn (36) aufweist, auf den der Ohranlageabschnitt (26) gesteckt ist.

10

21. Anpaßendstück nach einem der Ansprüche 16 bis 20, dadurch gekennzeichnet, daß die Fixiereinrichtung eine Klemmschraube aufweist, deren freies Schaftende in die Durchgangsbohrung (30) ragt.

22. Anpaßendstück nach einem der Ansprüche 16 bis 20, dadurch gekennzeichnet, daß die die Durchgangsbohrung (30) umgebende Wand des Kupplungsabschnitts (28) einen in Richtung der Durchgangsbohrungsachse verlaufenden, radial innen und außen offenen Schlitz (32) aufweist und daß die Fixiereinrichtung eine Klemmschraube (34) aufweist, die beiderseits des Schlitzes angreift.

23. Anpaßendstück nach einem oer Ansprüche 16 bis 22, dadurch gekennzeichnet, daß die Durchgangsbohrung (30) in einer Hülse (46) ausgebildet ist, die drehbar in eine zweite Durchgangsbohrung (48) des Kupplungsabschnitts (28) eingesetzt ist.

24. Anpaßendstück nach einem der Ansprüche 16 bis 23, dadurch gekennzeichnet, daß die beiden Anschläge durc Bereiche einer Kante gebildet sind, die mit Abstand senkrecht zur Durchgangsbohrungsachse (V) verläuft.

25. Anpaßendstück nach einem der Ansprüche 16 bis 23, dadurch gekennzeichnet, daß die beiden Anschläge (42) durch Bereiche einer ebenen Fläche gebildet sind, die mit Abstand parallel zur Durchgangsbohrungsachse (V) verläuft.

26. Anpaßendstück nach den Ansprüchen 17 und 25, dadurch gekennzeichnet, daß am Kupplungsabschnitt (28) ein quaderförmiger Kopf (38) ausgebildet ist, dessen Stirnseite die Schulter (40) bildet, wobei die Anschläge (42) an zumindest einer der Seitenflächen des Kopfes ausgebildet sind.

27. Anpaßendstück nach einem der Ansprüche 16 bis 26, gekennzeichnet durch eine die Durchgangsbohrung (30) umgebende zweite Schulter (44), deren Ort am Kupplungsabschnitt (28) ein Maß für die gewünschte Bügellänge ist.

Fig. 1

Fig. 3

Fig. 4

Fig. 6

Fig. 2

Fig. 7

Fig. 8

Fig 5

Fig. 9

Fig. 10

Fig. 11

Fig. 12

0 284 646